(19) Europäisches Patentamt
European Patent Office
Office européen des brevets

(11) **EP 2 647 840 B1**

(12) **EUROPÄISCHE PATENTSCHRIFT**

(45) Veröffentlichungstag und Bekanntmachung des Hinweises auf die Patenterteilung:
**19.07.2023   Patentblatt 2023/29**

(21) Anmeldenummer: **13174930.1**

(22) Anmeldetag: **23.03.2010**

(51) Internationale Patentklassifikation (IPC):
**H02M 5/458** (2006.01)   **F03D 9/00** (2016.01)
**H02J 3/04** (2006.01)   **H02J 3/06** (2006.01)
**H02P 9/10** (2006.01)

(52) Gemeinsame Patentklassifikation (CPC):
**H02J 3/241; F03D 7/0224; F03D 7/0284;
F03D 7/048; F03D 9/255; F03D 9/257; H02J 3/381;
H02P 9/105;** F05B 2240/96; F05B 2270/1033;
F05B 2270/1041; F05B 2270/309; F05B 2270/337;
H02J 2300/28; H02P 2101/15;        (Forts.)

(54) **Verfahren zum Betreiben einer Windenergieanlage**

Method for operating a wind turbine

Procédé de fonctionnement d'un aérogénérateur

(84) Benannte Vertragsstaaten:
**AT BE BG CH CY CZ DE DK EE ES FI FR GB GR
HR HU IE IS IT LI LT LU LV MC MK MT NL NO PL
PT RO SE SI SK SM TR**
Benannte Erstreckungsstaaten:
**BA**

(30) Priorität: **23.03.2009   DE 102009014012**

(43) Veröffentlichungstag der Anmeldung:
**09.10.2013   Patentblatt 2013/41**

(62) Dokumentnummer(n) der früheren Anmeldung(en) nach Art. 76 EPÜ:
**10710316.0 / 2 411 669**

(73) Patentinhaber: **Wobben Properties GmbH
26607 Aurich (DE)**

(72) Erfinder:
• **Beekmann, Alfred
26639 Wiesmoor (DE)**
• **de Boer, Wolfgang
26802 Moormerland (DE)**

(74) Vertreter: **Eisenführ Speiser
Patentanwälte Rechtsanwälte PartGmbB
Postfach 10 60 78
28060 Bremen (DE)**

(56) Entgegenhaltungen:
**DE-A1-102005 052 011    SU-A1- 1 163 457**

US-A1- 2007 085 343

• F.W. Koch ET AL: "Dynamic interaction of large offshore wind farms with the electric power system", 2003 IEEE Bologna Power Tech Conference Proceedings,, vol. 3, 1 January 2003 (2003-01-01), pages 632-638, XP055181182, DOI: 10.1109/PTC.2003.1304459 ISBN: 978-0-78-037967-1
• MORREN J ET AL: "Wind turbines emulating inertia and supporting primary frequency control", IEEE TRANSACTIONS ON POWER SYSTEMS, IEEE SERVICE CENTER, PISCATAWAY, NJ, US, vol. 21, no. 1, 1 February 2006 (2006-02-01), pages 433-434, XP008143711, ISSN: 0885-8950, DOI: 10.1109/TPWRS.2005.861956
• Anders Grauers: "Synchronous generator and frequency converter in wind turbine applications : system design and efficiency", , 1 May 1994 (1994-05-01), XP055480677, ISBN: 978-91-7-032968-5 Retrieved from the Internet: URL:http://webfiles.portal.chalmers.se/et/Lic/GrauersAndersLic.pdf [retrieved on 2018-06-01]
• CHEN Z: "Overview of different wind generator systems and their comparisons", IET RENEWABLE POWER GENERA,, vol. 2, no. 2, 9 June 2008 (2008-06-09), pages 123-138, XP006030616, ISSN: 1752-1424, DOI: 10.1049/IET-RPG:20070044

EP 2 647 840 B1

(52) Gemeinsame Patentklassifikation (CPC): (Forts.)
Y02E 10/72; Y02E 10/76

**Beschreibung**

Die Erfindung betrifft ein Verfahren zum Betreiben einer Windenergieanlage und eine Windenergieanlage zur Durchführung des Verfahrens.

Als Stand der Technik sei insbesondere hingewiesen auf "Grid Integration of Wind Energy Conversion Systems", Siegfried Heier, 1998, dort insbesondere die Seiten 263 ff. sowie US 7,345,373 und WO 01/86143.

WO 01/86143 offenbart die Lehre, die Leistung einer Windenergieanlage dann zu verringern, wenn die Netzfrequenz, also die Frequenz des Netzes, in welches die Windenergieanlage ihre elektrische Leistung einspeist, einen bestimmten Wert oberhalb der Sollfrequenz übersteigt.

Die Sollfrequenz liegt bei mitteleuropäischen Netzen regelmäßig bei 50Hz, bei USamerikanischen Netzen hingegen bei 60Hz.

Gleichzeitig gibt es aber auch stets geringe Netzfrequenzschwankungen, die abhängig sind davon, wie sehr das Verhältnis der durch die Energieerzeuger, die am elektrischen Netz angeschlossen sind, erzeugte Leistung ausbalanciert ist zur abgenommenen Leistung der Verbraucher, also derjenigen, die am elektrischen Netz angeschlossen sind und die elektrische Energie aufnehmen, um damit irgendwelche elektrische Gerätschaften zu betreiben.

Liegt beispielsweise das Leistungsangebot der Generatoren oberhalb dessen, was die am Netz angeschlossenen Verbraucher an Leistung abnehmen, so steigt die Netzfrequenz an und umgekehrt kann auch die Frequenz unterhalb der Sollfrequenz, z.B. von 50Hz sinken, wenn das Leistungsangebot geringer ist als das, was von den am Netz angeschlossenen elektrischen Verbrauchern abgenommen wird.

Das Netzmanagement, also das Management von Erzeugern sowie auch großen Verbrauchern, wird regelmäßig durch die Netzbetreiber vorgenommen. Das Netzmanagement kann dabei ganz unterschiedliche Regelungsmechanismen vorsehen, z.B. die automatische Zuschaltung bestimmter Generatoren (z.B. Gaskraftwerke), die automatische Abschaltung bestimmter großer Verbraucher oder auch den Einsatz von Pumpspeicherwerken u.dgl.. Bei einem Normalbetrieb gelingt es auch dem Netzmanagement großer Versorgungsnetzwerke ständig, die Netzfrequenz im Bereich der Sollfrequenz zu halten, wobei durchaus geringfügige Abweichungen erlaubt sind. Diese geringfügigen Abweichungen sollten jedoch regelmäßig den Bereich von ± 1‰ nicht überschreiten. Selbstverständlich kann zum Netzmanagement auch die Zuschaltung von weiteren Netzen, die mit dem Netz verbunden sind, vorgenommen werden, um somit zusätzliche Leistung in das Netz einzuspeisen oder aus dem Netz herauszunehmen und in andere Netze einzuspeisen.

Für Windenergieanlagen lehrt bereits das Dokument WO 01/086143 - wie eingangs ausgeführt - die Reduktion der Leistung unterhalb der aktuell verfügbaren Leistung, wenn ein bestimmter Netzfrequenzwert überschritten wird, z.B. ein Wert, welcher 3‰ oberhalb des Sollwerts der Netzfrequenz (z.B. über 50Hz) liegt.

Das Dokument lehrt ferner, dass dann, wenn die Frequenz weiterhin ansteigt, die Leistung linear weiter reduziert wird, abhängig vom weiteren Anstieg der Netzfrequenz.

Die deutsche Offenlegungsschrift DE 10 2005 052 011 A1 betrifft ein Verfahren zum Betreiben einer Windenergieanlage, bei dem die an das Netz abzugebende Wirkleistung bei einer Überschreitung eines Netzfrequenzgrenzwertes in Abhängigkeit einer momentanen Netzfrequenz geregelt wird.

Die US-amerikanische Offenlegungsschrift US 2007/0085343 A1 betrifft ebenfalls ein Verfahren zum Betreiben oder Steuern einer Windturbine. Die Windturbine wird in Antwort auf Änderungen eines Betriebsparameters und für einen Zeitraum in einer solchen Art und Weise gesteuert, dass eine höhere Leistung in das System eingespeist wird als dem Betriebsbereich des stationären Betriebs zuzuordnen ist.

Aufgabe der vorliegenden Erfindung ist es nun, den Betrieb einer Windenergieanlage gegenüber dem Stand der Technik zu verbessern und insgesamt die Netzstützung der Windenergieanlage bezogen auf das Netz zu verbessern.

Die Aufgabe wird erfindungsgemäß durch ein Verfahren mit dem Merkmal nach Anspruch 1 gelöst. Vorteilhafte Weiterbildungen sind durch die Unteransprüche beschrieben.

Gemäß der Erfindung wird nunmehr nicht mehr die Windenergieanlage bei Unterschreiten eines bestimmten Frequenzwerts unterhalb des Sollwerts der Netzfrequenz abgeschaltet, sondern die Windenergieanlage wird weiter betrieben, und zwar mit einer erhöhten Leistung, d.h. die Leistung ist kurzfristig und für einen kurzen Zeitraum höher als die zuvor eingespeiste Leistung. Hierzu wird z.B. die in dem Trägheitsmoment des Rotor-/Generatorsystems gespeicherte Rotationsenergie verwendet, d.h. es wird aus dem gesamten Rotor-/Generatorsystem kurzfristig mehr Leistung herausgeholt, so dass sofort bei Unterschreiten der Netzfrequenz unter den vorbestimmten Sollwert kurzfristig eine erhöhte Leistung zur Verfügung gestellt wird. Dies geschieht auch dann, wenn zuvor die Windenergieanlage mit Nennleistung eingespeist hatte, also ihr normales Maximalmaß abgeliefert hatte, nämlich die Leistung, die sie dem Wind entnehmen kann.

Der Betrag, um den die Leistung kurzfristig erhöht wird, liegt in einem Bereich von bis zu 10 bis 30% der Nennleistung, vorzugsweise ca. 20% der Nennleistung.

Der vorbestimmte Frequenzwert wird durch Vorgabe einer Totbandfrequenz festgelegt.

Sobald die Netzfrequenz unterhalb dieser Totbandfrequenz liegt, erfolgt die Anhebung der aktuellen Leistung der Windenergieanlage, sowie die Anhebung der von der Windenergieanlage abgegebenen, nämlich ins Netz eingespeisten Leistung. Die Totbandfrequenz liegt in diesem Fall um den vorbestimmten Frequenzwert unterhalb der gewünschten Sollfrequenz des Netzes.

Der vorbestimmte Frequenzwert ist vorzugsweise größer als 1‰, 2‰ oder 3‰ der Netzsollfrequenz. Im Falle von 50 Hz Netzsollfrequenz wird somit ein Unterschreiten der Frequenz 49,95, 49,90 bzw. 49,85 Hz erfasst.

Alternativ oder ergänzend kann auch eine relative Frequenzänderung, also ein relativer Frequenzabfall auch mit df/dt oder Frequenzgradient bezeichnet, betrachtet werden. Ist der Betrag einer solchen Netzfrequenzänderung pro Zeit zu groß, fällt die Frequenz also zu schnell, kann die aktuell einzuspeisende Leistung kurzfristig zum Stützen des Netzes erhöht werden. Das Erfassen einer solchen Frequenzänderung pro Zeit, also des df/dt ermöglicht gegebenenfalls ein schnelleres Erfassen eines Netzfrequenzabfalls und damit ein schnelleres Erkennen der Notwendigkeit einer Netzstützung. Die Erfassung eines absoluten Frequenzwertes, also des Unterschreitens eines absoluten vorbestimmten Frequenzwertes als auch der Änderung pro Zeit kann auch kombiniert werden. So kann beispielsweise ein schneller Netzfrequenzabfall weniger kritisch zu bewerten sein, wenn der Absolutwert der Netzfrequenz oberhalb der Nennfrequenz ist.

Wird zusätzlich oder auch alternativ ein Frequenzgradient erfasst, so hat sich als günstig herausgestellt, eine Leistungserhöhung ab einem Gradienten von 0,1 Hz/s vorzusehen. Als vorteilhafter Bereich für das Einleiten einer Leistungserhöhung hat sich ein Änderungsbetrag, also ein Gradient von 0,2 - 7 Hz/s, insbesondere 0,5 - 2 Hz/s erwiesen. So sind beispielsweise 0,2 Hz/s, 0,5 Hz/s, 1 Hz/s, 2 Hz/s und 5 Hz/s günstige Werte. Es ist zu beachten, dass die Erfassung eines Frequenzgradienten von beispielsweise 1 Hz/s üblicherweise keine Messung über den Zeitraum einer gesamten Sekunde voraussetzt. Vielmehr sind Messzeiten von 20 ms und weniger, insbesondere 10 ms, geeignete Messzeiten. Auch geringere Messzeiten von beispielsweise 5 ms oder noch geringere sind bevorzugte Werte. Darüber hinaus kann sowohl die Messzeit als auch der zugrunde gelegte Änderungsbetrag bzw. der zugrunde gelegte Frequenzgradient von der Netzsollfrequenz abhängen. Die zuvor genannten Werte für den Frequenzgradienten und die hierfür vorgesehenen Messzeiten beziehen sich auf eine 50 Hz Sollfrequenz. Im Falle einer 60 Hz Sollfrequenz kann ggf. ein etwas größerer Gradient und/oder eine etwas kürze Messzeit vorgesehen sein.

Außerdem ist zu erwähnen, dass die kurzfristige Leistungserhöhung auch verwendet werden kann, um die Netzfrequenz zu stabilisieren bzw. zu glätten oder Frequenzschwankungen zu dämpfen. Insbesondere die Dämpfung von Frequenzschwankungen kann vorteilhafterweise den Frequenzgradienten berücksichtigen.

Die kurzfristige Leistungserhöhung erfolgt unter Ausnutzung der in dem Trägheitsmoment des Rotor-Generatorsystems gespeicherten Rotationsenergie. Dies betrifft somit die Entnahme kinetischer Energie, die sowohl in dem ein oder mehrere Rotorblätter aufweisende drehenden Rotor gespeichert ist, als auch in dem drehenden Läufer des Generators. Das Entnehmen einer höheren Leistung kann insbesondere durch Erhöhung des Erregerstroms und damit durch Erhöhung des Generatorgegenmomentes des Läufers erreicht werden. Insbesondere getriebelose Generatoren mit Läufern großen Durchmessers und damit großen Massen und entsprechend großen Trägheitsmomenten können eine erhebliche Menge kinetischer Energie speichern.

Vorzugsweise entspricht die Frequenz der eingespeisten Leistung stets der aktuellen Netzfrequenz. Fällt die Netzfrequenz also ab, so kann eine Leistungserhöhung vorgenommen werden, wobei aber die Frequenz der Einspeisung dennoch, angepasst an die aktuelle Frequenz, verringert wird.

Vorzugsweise wird ein Verfahren vorgeschlagen, dass dadurch gekennzeichnet ist, dass die Erhöhung der Leistung oberhalb der aktuellen Leistung erfolgt, d.h. auch oberhalb der Nennleistung, wenn zuvor mit Nennleistung eingespeist wurde. Somit wird selbst beim Betreiben der Windenergieanlage im Nennbetrieb eine Leistungserhöhung bei einem kritischen Frequenzabfall durchgeführt. Hierbei wurde erkannt, dass eine Nennleistung, die regelmäßig jedenfalls für den Dauerbetrieb auch eine Maximalleistung darstellen kann, für eine kurze Netzstützung ohne Beschädigung der Windenergieanlage überschritten werden kann.

Gemäß einer Ausführungsform wird vorgeschlagen, dass das Verfahren dadurch gekennzeichnet ist, dass innerhalb eines Zeitraums von 10 bis 1000 ms, insbesondere 20 bis 500 ms, vorzugsweise 50 bis 100 ms nach Unterschreiten des vorbestimmten Frequenzwertes der Netzfrequenz bzw. nach Überschreiten des vorbestimmten Änderungsbetrages die Leistungserhöhung erfolgt und/oder dass mit einer erhöhten Leistung, d.h. einer Leistung, die oberhalb der zuvor eingestellten Leistung liegt, eingespeist wird für einen weiteren Zeitraum von wenigstens 0,5 sec, vorzugsweise wenigstens 1 sec bis maximal 30 sec, vorzugsweise maximal ca. 3 bis 6, 8, 10, 12 oder 15 sec. Grundsätzlich ist eine möglichst kurze Reaktionszeit von beispielsweise 10 ms als idealisierter Wert für das Vornehmen einer Leistungserhöhung anzusehen. Insbesondere entspricht die Zeit von 10 ms bei einer Netzfrequenz von 50 Hz einer Halbwelle. Eine größere Ansprechzeit von bis zu 1 sec ist zum Verhindern eines überreagierenden oder gar instabilen Systems wünschenswert. Insbesondere Werte von 50 bis 100 ms haben sich als günstiger Kompromiss erwiesen.

Die Leistungserhöhung ist grundsätzlich für einen kurzen Zeitraum erforderlich. Dieser Zeitraum dauert üblicherweise zumindest 0,5 sec, vorzugsweise aber 1 sec und reicht bis zu 3, 6, 8, 10, 12, 15 und max. 30 sec. Sofern eine erhöhte Leistungseinspeisung von mehr oder deutlich mehr als 10 sec erforderlich ist, so ist nicht mehr von einer momentanen Stützungsmaßnahme, sondern vielmehr von einem erhöhten Leistungsbedarf generell auszugehen. Ein effektiver Bereich für die Leistungserhöhung hat sich bei 3 bis 6, 8, 10, 12 oder 15 sec erwiesen.

Vorzugsweise wird ein Verfahren zum Steuern eines Windparks vorgesehen, bei dem jede Windenergieanlage gemäß einem erfindungsgemäßen Verfahren gesteuert wird. Insbesondere ist jede Windenergieanlage dazu vorbereitet, im Falle eines Frequenzeinbruchs eine erhöhte Leistung an das Netz abzugeben. Ein Windpark umfasst dabei wenigstens zwei Windenergieanlagen, üblicherweise aber deutlich mehr Windenergieanlagen wie 10 Windenergieanlagen, 50 Windenergieanlagen oder noch mehr. Unter allen Windenergieanlagen des Windparks sind aber nur diejenigen zu verstehen, die auch in das beschriebene Verfahren eingebunden sind.

Vorzugsweise erfolgt hier die Anhebung der an das Netz abzugebenden Leistung aller Windenergieanlagen einheitlich und/oder zentral. Hierdurch wird zum einen verhindert, dass unterschiedliche Anlagen eines Windparks zu unterschiedlichen Zeiten ansprechen und womöglich sich behindern. Zudem können Windparks gewissen Bedingungen wie Grenzwerten für die Netzankopplung unterliegen, wenn der Windpark die Leistung aller Windenergieanlagen an einer Netzanschlussstelle einspeist. So können beispielsweise Obergrenzen für die eingespeiste Leistung seitens der Anschlussleitung aber gegebenenfalls auch bei Verwendung eines zentralen Transformators für diesen vorgegeben sein. Eine zentrale Steuerung kann solche Randbedingungen berücksichtigen. Mitunter kann eine einheitliche Steuerung der Windenergieanlagen - soweit das bei unterschiedlichen Windenergieanlagen eines Windparks möglich ist - hilfreich sein. So kann zumindest eine teilweise einheitliche Steuerung beispielsweise hinsichtlich der Ansprechzeiten und/oder Zeitdauern der Leistungserhöhung vorgenommen werden. Sollte beispielsweise in dem Fall, dass alle oder die meisten Windenergieanlagen eines Windparks im Nennbetrieb sind, eine Leistungserhöhung aller Windenergieanlagen aufgrund einer Leistungseinspeisungsobergrenze des Windparks begrenzt sein, kann die Steuerung so erfolgen, dass zunächst ein Teil der Windenergieanlagen zu einer Leistungserhöhung beitragen und danach ein anderer Teil der Windenergieanlagen. Zudem kann der Steuerungs- und Regelungsaufwand verringert werden durch eine zentrale Steuereinheit, die beispielsweise für eine Leistungserhöhung lediglich die entsprechenden Leistungssollwerte an jede Windenergieanlage im Windpark ausgibt.

Weiterhin wird eine Windenergieanlage vorgeschlagen, die dazu vorbereitet ist, ein erfindungsgemäßes Verfahren einzusetzen. Weiterhin wird ein Windpark vorgeschlagen, der mehrere erfindungsgemäße Windenergieanlagen umfasst und vorzugsweise ein zentrales Steuerverfahren einsetzt und/oder bei dem die Anhebung der an das Netz abzugebenden Leistung der Windenergieanlagen zumindest teilweise einheitlich gesteuert wird. Eine zentrale Steuerung der Anhebung der an das Netz abzugebenden Leistung aller Windenergieanlagen kann von einer separaten zentralen Steuereinheit bewerkstelligt werden und/oder eine Windenergieanlage kann als Master fungieren, so dass sich die übrigen Windenergieanlagen nach dieser Windenergieanlage richten. Grundsätzlich ist auch die steuerungstechnische Aufteilung eines Windparks in mehrere Parkabschnitte möglich, um z.B. Anlagen desselben oder ähnlichen Typs jeweils steuerungstechnisch zu bündeln.

Zur Erhöhung der Leistungsabgabe kommt nicht nur die Ausnutzung der Rotationsenergie des Trägheitsmomentes in Betracht, sondern es kann auch unterstützend oder ggf. ausschließlich eine Änderung des Einstellwinkels des Rotorblätter - eine Änderung des Pitchwinkels, sogenanntes Pitchen - vorgenommen werden, um die Windausbeute zu erhöhen. Dies erfolgt insbesondere dann, wenn die Windenergieanlage unter Nennlast läuft, also bereits Nennleistung abgibt und insbesondere die Rotorblätter bereits teilweise zur Regelung der Nenndrehzahl gepitcht wurden.

Nach einer Leistungserhöhung kann sich die Drehzahl des Rotors verringert haben, weil kinetische Energie entnommen wurde. Insbesondere bei einer Leistungserhöhung im Falle des Nennlastbetriebs kann eine solche Reduzierung aber geringer ausfallen oder gar nicht auftreten. Zu Erwarten ist ein Drehzahlrückgang insbesondere im Teillastbereich und hängt dann von Höhe und Dauer der Leistungserhöhung, also der zusätzlich abgegebenen Leistung ab.

Die Erfindung wird nachfolgend anhand von Ausführungsbeispielen unter Bezugnahme auf die begleitenden Figuren näher erläutert:

Fig. 1     zeigt schematisch eine teilweise geöffnete Gondel einer Windenergieanlage schematisch mit Blick auf die Nabe und Teile des Generators;

Fig. 2     zeigt schematisch ein Übersichtsbild mit getriebeloser Rotor-Generatorankopplung mit Frequenzmessung;

Fig. 3     zeigt ein Ausführungsbeispiel eines Leistungs-/Frequenzverhaltens einer Windenergieanlage;

Fig. 4     zeigt eine alternative Ausführungsform zu Fig. 3;

Fig. 5     zeigt an einem Beispiel Leistungsverläufe für eine konstante Leistungserhöhung;

Fig. 6     zeigt an einem Beispiel Leistungsverläufe bei einer Leistungserhöhung, die in Abhängigkeit der Rotordrehzahl erfolgt;

Fig. 7     zeigt in einem Beispiel die Messung einer Leistung im Falle einer von der Rotordrehzahl abhängigen Leistungserhöhung;

Fig. 8     zeigt eine Messung einer Leistung mit konstanter Leistungserhöhung und

Fig. 9     zeigt mögliche Verläufe der Leistungswerte, um die eine Leistungserhöhung durchgeführt werden soll in Abhängigkeit von der Frequenz und für unterschiedliche einstellbare Maximalwerte der Leistungserhöhung.

Gleiche Bezugszeichen können gleiche aber auch ähnliche, nicht identische Elemente nachfolgend bezeichnen. Nachfolgend wird der Vollständigkeit halber eine Windenergieanlage mit einem Synchrongenerator und getriebelosem Konzept mit einem Vollumrichter erläutert.

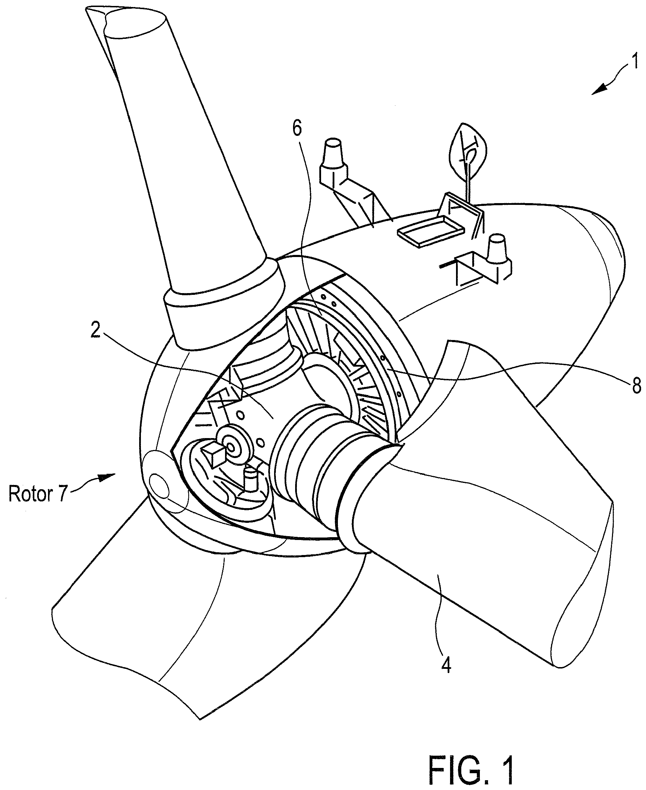

Fig. 1 zeigt schematisch eine Gondel 1 einer getriebelosen Windenergieanlage. Die Nabe 2 ist aufgrund der teilweise geöffnet dargestellten Verkleidung (Spinner) zu erkennen. An der Nabe sind drei Rotorblätter 4 befestigt, wobei die Rotorblätter 4 nur in ihrem nabennahen Bereich dargestellt sind. Die Nabe 2 mit den Rotorblättern 4 bildet einen aerodynamischen Rotor 7. Die Nabe 2 ist mit dem Rotor 6 des Generators, der auch als Läufer 6 bezeichnet werden kann und nachfolgend als Läufer 6 bezeichnet wird, mechanisch fest verbunden. Der Läufer 6 ist gegenüber dem Stator 8 drehbar gelagert.

Der Läufer 6 wird während seiner Drehung relativ zum Stator 8 bestromt, üblicherweise mit einem Gleichstrom, um dadurch ein magnetisches Feld zu erzeugen und ein Generatormoment bzw. Generatorgegenmoment aufzubauen, das durch diesen Erregerstrom entsprechend auch eingestellt und verändert werden kann. Ist der Läufer 6 somit elektrisch erregt, erzeugt seine Drehung gegenüber dem Stator 8 ein elektrisches Feld in dem Stator 8 und damit einen elektrischen Wechselstrom.

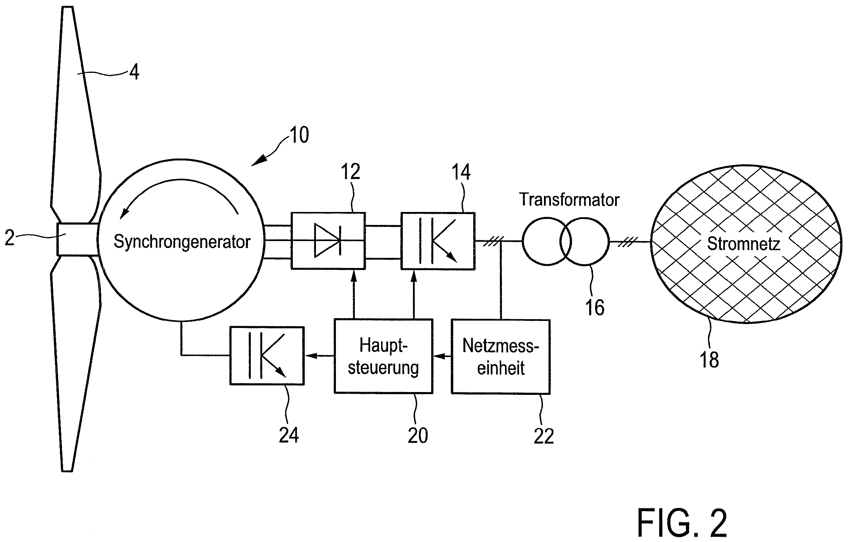

Der im Generator 10, der im Wesentlichen aus dem Läufer 6 und Stator 8 aufgebaut ist, erzeugte Wechselstrom wird gemäß dem in Fig. 2 gezeigten Aufbau über einen Gleichrichter 12 gleichgerichtet. Der gleichgerichtete Strom bzw. die gleichgerichtete Spannung wird dann mit Hilfe eines Wechselrichters 14 in ein 3-Phasensystem mit gewünschter Frequenz gewandelt. Das so erzeugte dreiphasige Strom-Spannungs-System wird mittels eines Transformators 16 in der Spannung insbesondere hochtransformiert, um in ein angeschlossenes Stromnetz 18 eingespeist zu werden. Theoretisch könnte auf den Transformator verzichtet werden oder dieser durch eine Drossel ersetzt werden. Üblicherweise sind die Spannungsanforderungen im Stromnetz 18 aber so, dass eine Hochtransformierung mittels Transformator erforderlich ist.

Zur Steuerung wird eine Hauptsteuerung 20 verwendet, die auch als Main-Control-Einheit bezeichnet werden kann und die oberste Regelungs- und Steuereinheit der Windenergieanlage bildet. Die Hauptsteuerung 20 erhält ihre Information unter anderem über die Netzfrequenz von der untergeordneten Netzmesseinheit 22. Die Hauptsteuerung steuert den Wechselrichter 14 sowie den Gleichrichter 12. Grundsätzlich könnte natürlich auch ein ungesteuerter Gleichrichter verwendet werden. Außerdem steuert die Hauptsteuerung 20 einen Gleichstromsteller 24 zum Einspeisen des Erregerstroms in den Läufer 6, der Teil des Generators 10 ist. Die Hauptsteuerung 20 modifiziert unter anderem bei Unterschreiten eines vorgegebenen Netzfrequenzgrenzwertes die Einspeisung bzw. den Arbeitspunkt des Generators. Da der Generator drehzahlvariabel betrieben wird, erfolgt die Einspeisung in das Netz wie beschrieben mit einem Vollumrichter, der im Wesentlichen durch den Gleichrichter 12 und den Wechselrichtet 14 gebildet wird.

Im Betrieb wird die Netzspannung und Netzfrequenz von der Netzmesseinheit 22 permanent dreiphasig gemessen. Aus der Messung ergibt sich - jedenfalls im Falle einer Netzfrequenz von 50 Hz - alle 3,3 ms ein neuer Wert für eine der 3 Phasenspannungen. Die Netzfrequenz wird somit je Spannungshalbwelle erfasst, gefiltert und mit den voreingestellten Grenzwerten verglichen. Für ein 60Hz-System wäre etwa für alle 2,7 ms, nämlich etwa zu jedem Nulldurchgang, ein Wert für eine der 3 Phasenspannungen verfügbar.

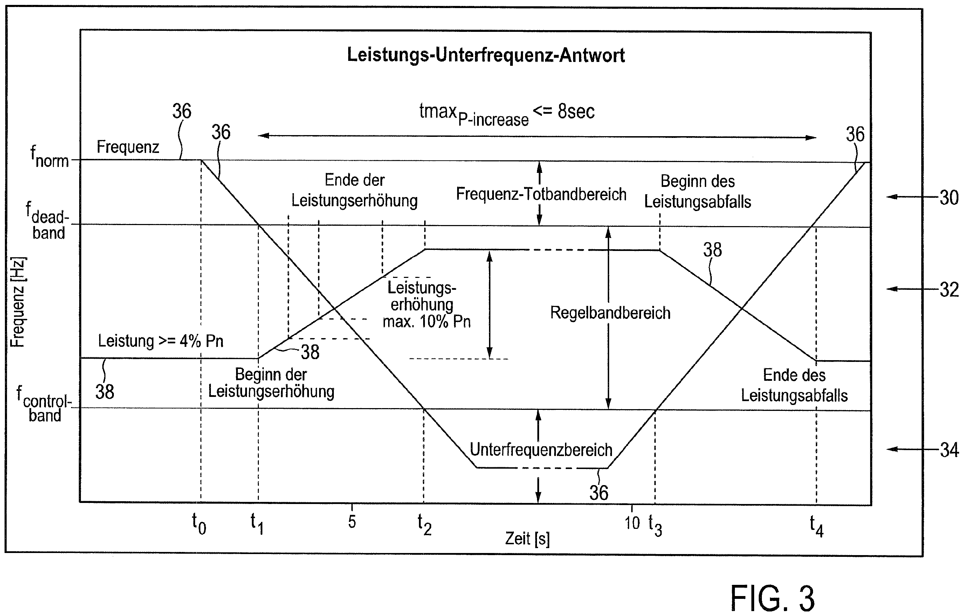

Fig. 3 zeigt ein schematisches Beispiel eines Frequenzverlaufes sowie Frequenzbereiche über die Zeit abgetragen, wobei auch ein zugehöriger Leistungsverlauf eingezeichnet ist.

Aus der Fig. 3 ist zu erkennen, dass die Hauptsteuerung in Bezug auf die Frequenz zwischen drei Betriebsbereichen unterscheidet, nämlich dem Totbandbereich 30, dem Regelbandbereich 32 und dem Unterfrequenzbereich 34. Der Totbandbereich ist der Frequenzbereich zwischen der Nennfrequenz $f_{norm}$ bzw. $f_N$ und der darunter liegenden Totbandfrequenz $f_{deadband}$. Die Nennfrequenz ist üblicherweise fest vorgegeben, wie beispielsweise 50 Hz für das europäische Verbundnetz oder 60 Hz im USamerikanischen Raum. Die Totbandfreqeunz $f_{deadband}$ kann eingestellt werden, wodurch der Totbandbereich jedenfalls in Bezug auf diese Untergrenze eingestellt werden kann. In dem Totbandbereich ist keine Leistungserhöhung vorgesehen.

Der Regelbandbereich 32 erstreckt sich zwischen der Totbandfrequenz $f_{deadband}$ und der darunter liegenden Regelbandfrequenz $f_{controlband}$. Der Regelbandbereich kann entsprechend eingestellt werden durch Vorgabe sowohl der Totbandfrequenz $f_{deadband}$ als auch der Regelbandfrequenz $f_{controlband}$. Im Regelbandbereich, d.h. wenn die Ist-Frequenz Werte im Regelbandbereich annimmt, kann eine Erhöhung der Wirkleistung in Abhängigkeit der Frequenzabweichung, nämlich insbesondere der Ist-Frequenz von der Totbandfrequenz um eine Leistungserhöhung $P_{increase}$ erfolgen. Hierbei ist eine von der Frequenzabweichung insbesondere proportional abhängige Wirkleistungserhöhung vorgesehen. Somit ist auch die Wirkleistungserhöhung $P_{increase}$ eine veränderliche Größe des Regelbandbereichs. Es kann somit eine Erhöhung der Wirkleistung in Abhängigkeit von der Frequenzabweichung um eine zusätzliche Leistung $P_{increase}$ von 0% bis zu einem voreingestellten Wert $P_{increase\_set}$ erfolgen. Die maximale Erhöhung der Wirkleistung ist voreinstellbar mittels $P_{increase\_set}$, wobei $P_{increase\_set}$ von 0% bis $P_{increase\_max}$ in 1 %-Schritten erhöht werden kann.

Der Unterfrequenzbereich 34 erstreckt sich von der Regelbandfrequenz $f_{controlband}$ abwärts. Befindet sich die Ist-Frequenz unterhalb der Regelbandfrequenz $f_{controlband}$, so wird im Unterfrequenzbereich die maximal voreingestellte Leistungserhöhung vorgenommen. Die Leistungserhöhung $P_{increase}$ nimmt somit den maximalen Wert an, der beispielsweise 10% der Nennleistung betragen kann.

In Fig. 3 ist der beispielhafte Verlauf der Ist-Frequenz fettgezeichnet dargestellt. Die Frequenz weist zunächst den Wert der Nennfrequenz $F_{norm}$ auf, bis sie zum Zeitpunkt $t_0$ abfällt. Der Verlauf der Ist-Frequenz ist mit dem Bezugszeichen 36 gekennzeichnet. Außerdem ist ein beispielhafter Verlauf einer einzustellenden Leistung mit dem Bezugszeichen 38 eingezeichnet. Es ist zu beachten, dass für die hier beispielhaft beschriebene Steuerung die Leistung zumindest 4% der Nennleistung betragen muss, um die gewünschte, zumindest die gewünschte maximale Leistungserhöhung durchführen zu können.

Zum Zeitpunkt $t_0$ fällt die Ist-Frequenz 36 ab, befindet sich zunächst aber im Totbandbereich 30, so dass keine Leistungserhöhung stattfindet. Die Ist-Leistung, die zumindest 4% der Nennleistung beträgt, bleibt somit zunächst konstant. Zum Zeitpunkt $t_1$ erreicht die Ist-Frequenz 36 die Totbandfrequenz $f_{deadband}$ und unterschreitet diese. Im gezeigten Beispiel nimmt die Leistung 38 linear mit dem weiteren Abfall der Frequenz 36 zu. D.h. die Leistungserhöhung $P_{increase}$, nämlich die jeweilige Erhöhung gegenüber dem Anfangswert $P_A$ ist hier proportional zur Differenz zwischen Ist-Frequenz 36 und Totbandfrequenz $f_{deadband}$. Der Proportionalitätsfaktor ist hier so eingestellt, dass die Leistungserhöhung $P_{increase}$ ihren Maximalwert von 10% der Nennleistung $P_n$ erreicht, wenn die Frequenz die Regelbandfrequenz $f_{controlband}$ erreicht. Dies ist zum Zeitpunkt $t_2$ der Fall. Die Leistungserhöhung $P_{increase}$ kann somit für den Regelbandbereich grundsätzlich angegeben werden mit: $P_{increase} = P_{increase\_set} \times P_N \times (f_{deadband} - f) / (f_{deadband} - f_{controlband})$, sofern weitere Randbedingungen wie auch maximale Zeiten für eine Leistungserhöhung eingehalten werden.

Sinkt die Frequenz 36 weiter unter die Regelbandfrequenz $f_{controlband}$, kann die Leistung 38 nicht weiter erhöht werden und bleibt somit ab dem Zeitpunkt $t_2$ zunächst auf einem maximalen Wert, nämlich dem Anfangswert plus dem maximalen Wert von $P_{increase}$, nämlich + 10% der Nennleistung. Steigt die Frequenz nun wieder an und überschreitet bei $t_3$ den Wert der Regelbandfrequenz $f_{controlband}$, so wird auch die Leistungserhöhung wieder gesenkt, bis die Frequenz 36 zum Zeitpunkt $t_4$ über die Totbandfrequenz $f_{deadband}$ ansteigt. Zu diesem Zeitpunkt $t_4$ hat die Leistung dann wieder den Anfangswert $P_A$ erreicht und fällt nicht weiter ab.

Es ist zu betonen, dass die Fig. 3 einen idealisierten Verlauf zeigt und etwaige Regeldynamiken zunächst außer Betracht sind. Zudem sollte im genannten Beispiel - entgegen der schematischen Darstellung - die maximale Zeit für die die Leistung erhöht wird, 8 sec nicht überschreiten. Gerade bei kleineren Leistungserhöhungen kann jedoch ggf. eine Verlängerung dieser Zeit in Betracht kommen. Es ist zu beachten, dass der lineare Frequenzabfall und lineare Frequenzanstieg zur Veranschaulichung des Regelschemas gewählt wurde und nicht zwingend mit einem üblicherweise zu erwartenden Frequenzverhalten eines Versorgungsnetzes übereinstimmt.

Fig. 3 zeigt in einem Diagramm den Verlauf der Netzfrequenz und als Reaktion hierauf das Verhalten der Leistungseinspeisung einer Windenergieanlage.

Es ist im Übrigen zu erkennen, dass zu einem bestimmten Zeitpunkt t1 die Netzfrequenz einbricht und zwar unterhalb eines bestimmten Frequenzwertes unterhalb der Sollfrequenz von etwa 50Hz. Wenn ein Frequenzwert von beispielsweise 1‰ unterhalb des Sollwerts unterschritten wird (und noch weiter absinkt), wird praktisch instantan, also extrem kurzfristig und kurzzeitig, also innerhalb von wenigen ms, z.B. 50 bis 100ms oder auch 500 bis 1000 ms, um ein weiteres Beispiel zu nennen, die Leistung der Windenergieanlage über ihren aktuellen Wert erhöht, z.B. um 20% der aktuellen Leistung oder um bis zu 30% oberhalb der Nennleistung. Das Beispiel gemäß Fig. 3 geht von einer Erhöhung um 10% der Nennleistung aus. Im Extremfall, wenn die Leistung gerade 4% der Nennleistung beträgt und um 10% der Nennleistung erhöht wird, könnte - zumindest theoretisch - eine Leistungserhöhung um das 2,5-fache der aktuellen Leistung durchgeführt werden. Dies kann unter anderem damit begründet werden, dass auch bei geringer Leistungsabgabe bereits eine verhältnismäßig hohe Drehzahl und damit entsprechend viel Rotationsenergie gespeichert ist. So kann bspw. bei 4% Nennleistung bereits eine Drehzahl von etwa 50% der Nenndrehzahl erreicht sein.

Wenn sich viele Windenergieanlagen so wie zuvor beschrieben verhalten, wird sehr kurzfristig ein großes Maß an zusätzlicher Leistung zur Verfügung gestellt, mit der Folge, dass die Erzeuger-/Verbraucher-Inbalance sehr schnell ausgeglichen wird, mit der weiteren Folge, dass die Netzfrequenz sehr kurzfristig wieder ansteigt und auch sogar ihren Sollwert kurzfristig übersteigt.

In dem dargestellten Beispiel erfolgt die erhöhte Leistungseinspeisung nur für ca. 2 bis 10 sec, vorzugsweise nur ca. bis zu 3 sec, je nachdem, wie die Frequenz sich verhält.

Steigt beispielsweise die Frequenz sehr schnell wieder an, so kann die erhöhte Leistungseinspeisung auch eher wieder reduziert und beendet werden, während hingegen die erhöhte Leistungseinspeisung länger erfolgt, wenn die Unterfrequenzleistungseinspeisung für einen längeren Zeitraum verbleibt.

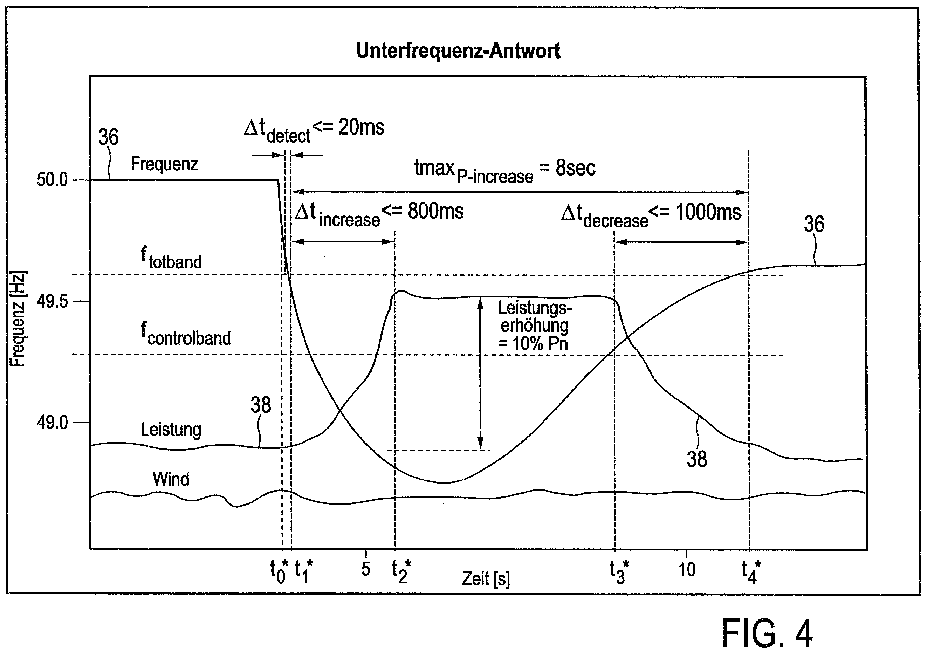

Fig. 4 zeigt die erhöhte Leistungseinspeisung auch für den Fall, bei dem die Leistung schwankt, z.B. weil der Wind insgesamt schwankt. Zudem betrifft Fig. 4 auch sonst einen an ein real zu erwartendes Verhalten angelehnten Verlauf.

Die Frequenz 36 weist zunächst Nennfrequenz, nämlich 50 Hz auf. Zum Zeitpunkt $t_0^*$ fällt die Frequenz 36 dann sehr schnell ab und unterschreitet auch recht bald die Totbandfrequenz $f_{deadband}$. In Fig. 4 kommt es zwar auf das Unterschreiten der Totbandfrequenz auch an, dies wird aber erst nach dem Unterschreiten der gewählten Totbandfrequenz nach einer Erfassungszeit $\Delta t_{detect}$ erfasst, wobei diese Erfassungszeit maximal 20 ms beträgt. Die Unterfrequenz wurde somit gemäß Fig. 4 zum Zeitpunkt $t_1^*$ erfasst und die Leistung 38 wird daraufhin erhöht. Bis zur maximalen Leistungserhöhung von $P_{increase}$ von 10% Nennleistung oberhalb der zum Zeitpunkt $t_1^*$ noch herrschenden Leistung vergeht eine Erhöhungszeit $\Delta t_{increase}$ von $\leq 800$ ms. Beim Unterschreiten der gewählten Totbandfrequenz $f_{deadband}$ wird von der Hauptsteuerung durch interne Steuerfunktionen eine Leistungserhöhung $P_{increase}$ von maximal 10% der Nennleistung der Windenergieanlage aus dem Generator für eine voreingestellte Zeit $t_{max}$ erzielt. Die Erkennungszeit für die Unterfrequenz ist kleiner als 20 ms. Die Höhe der zusätzlichen Leistung $P_{increase}$ ist proportional abhängig von der eingestellten maximalen zulässigen Leistungserhöhung und von der Frequenzabweichung. Die Leistung wird - soweit es jedenfalls aufgrund der Frequenzabweichung in Betracht kommt - mit einem fixen Gradienten von ca. 250 kW/s erhöht. Dadurch wird im vorliegend dargestellten Fall eine Leistungserhöhung auf den Maximalwert von maximal 10% der Nennleistung der Windenergieanlage in $\leq 800$ ms erzielt. Die Leistungserhöhung $P_{increase}$ ist über eine Zeit von maximal 8 sec verfügbar. Nach spätestens 8 sec wird in dem gezeigten Beispiel die Wirkleistung der Windenergieanlage wieder mit etwa 250 kW/s auf den normalen, insbesondere bisherigen Arbeitspunkt gebracht.

Von dem Zeitpunkt $t_1^*$ aus gesehen ist somit nach etwa 800 ms zum Zeitpunkt $t_2^*$ die maximale Leistungserhöhung erreicht. Die nun eingestellte, maximal erhöhte Leistung wird bis zum Zeitpunkt $t_3^*$ gehalten, um dann bis zum Zeitpunkt $t_4^*$ allmählich wieder auf etwa den Anfangswert bzw. windabhängig auf einen neuen Wert abzufallen. Die Zeit von $t_1^*$ bis $t_4^*$, die auch als $tmax_{P\text{-}increase}$ bezeichnet werden kann, beträgt für das gezeigte Beispiel maximal 8 sec. Es ist zu beachten, dass auch die Fig. 4 eine schematische Darstellung ist und genaue Werte einschließlich genauer Zeitwerte nicht exakt abgelesen werden können.

Es ist zu bemerken, dass die Frequenz 36 während der Leistungserhöhung, insbesondere nach dem Zeitpunkt $t_2^*$ wieder ansteigt und dies auch auf die Leistungserhöhung zurückgeführt werden kann, also auf die zusätzlich ins Netz eingespeiste Leistung. Gleichwohl hängt dies maßgeblich von dem jeweiligen Netz und der jeweiligen Windenergieanlage ab, insbesondere davon, ob noch weitere Windenergieanlagen eine solche Leistungseinspeisung vornehmen. Die Frequenz steigt im Übrigen in dem gezeigten Beispiel innerhalb des Leistungserhöhungsbereichs aber nicht auf die Nennfrequenz wieder an. Dennoch wird die Leistungserhöhung aufgrund der erreichten Maximalzeit verringert und beendet.

Für die erhöhte Leistungseinspeisung verwendet die erfindungsgemäße Windenergieanlage die in dem drehenden System aus Rotor/Generator aufgrund des Trägheitsmomentes gespeicherte Rotationsenergie. D.h., dass durch die zusätzlichen Abgriffe von Leistung, die oberhalb dessen liegt, was eigentlich durch die Leistungscharakteristik der Windenergieanlage vorgegeben ist, das gesamte Rotor-/Generatorsystem zwar sich weiterhin dreht, aber doch auch an Drehenergie verliert und sich damit nach der erhöhten Leistungseinspeisung langsamer dreht als zuvor, weil dem gesamten System mehr Leistung entnommen wurde, als durch den Wind zugeführt wurde.

Das erfindungsgemäße Verhalten der Windenergieanlage führt aber vor allem dazu, die kritischen Unterfrequenzfälle erfolgreich zu managen bzw. durch bestehende Windenergieanlagen erfolgreich zu überbrücken, so dass auch innerhalb des kritischen Zeitraums von beispielsweise 1 bis 8 sec, insbesondere 1 bis 3 sec nach Eintreten des Unterfrequenzfalls weitere Netzmanagement-Eingriffe eingeleitet werden können, die dann, nachdem die Windenergieanlage bzw. die Windenergieanlagen (oder ganze Windparks) ihre zusätzliche Leistung eingespeist haben, in ihrer Wirkung greifen und das Netz erfolgreich stützen.

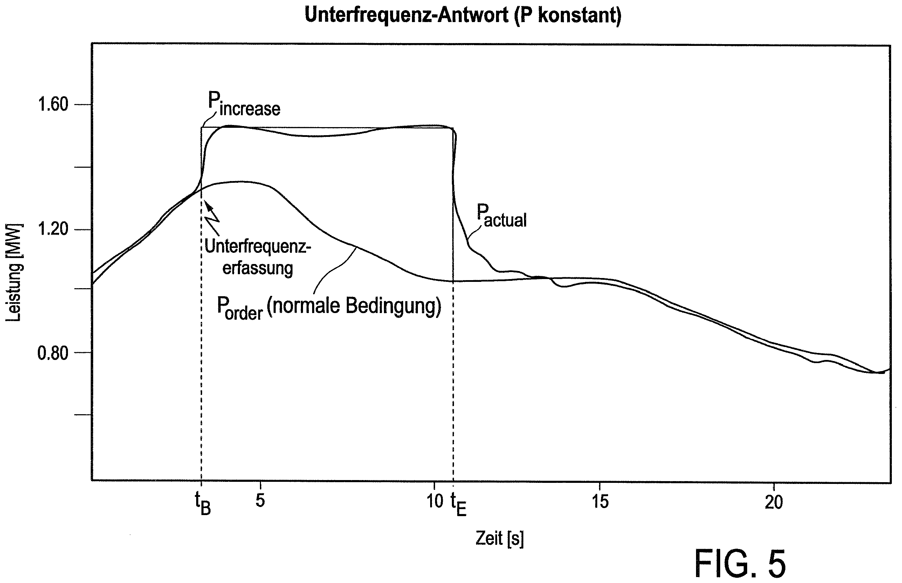

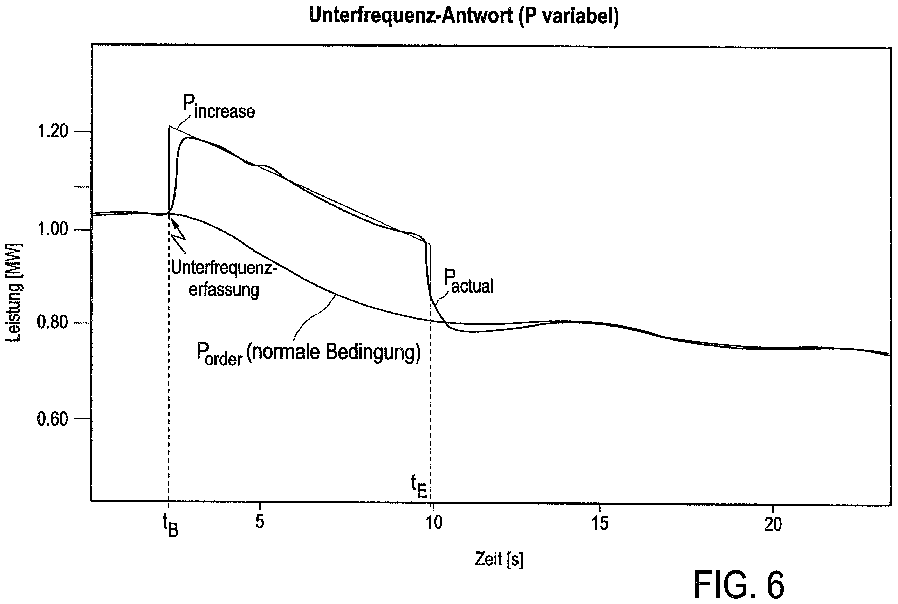

Die technische Verfügbarkeit der Leistungserhöhung $P_{increase}$ im Falle einer Netzunterfrequenz ist grundsätzlich ab einer momentanen Leistung $P_{actual}$ von 4% der Nennleistung gegeben. Es ist dann eine Leistungserhöhung $P_{increase}$ um 10% bezogen auf die Nennleistung möglich. Nachfolgend wird in den Fig. 5 bis 8 grundsätzlich eine Leistungserhöhung von 200 kW für eine beispielhafte Windenergieanlage dargestellt. Hierbei bilden 200 kW 10% der Nennleistung. Grundsätzlich kann für das Verhalten der Leistungserhöhung während der Frequenzstützung zwischen zwei Optionen gewählt werden, nämlich zwischen einer frequenzabhängigen Leistungserhöhung, wie in Fig. 5 gezeigt ist und einer frequenzabhängigen und drehzahlabhängigen Leistungserhöhung, wie sie in Fig. 6 gezeigt ist.

Eine Ausführungsform, die auch anhand der Fig. 4 erläutert werden kann und deren Werte in der Fig. 4 angegeben sind, kann wie folgt erläutert werden.

Bei Frequenzänderungen bis unterhalb des Totbandes stellt sich die geforderte Leistungserhöhung mit einem fixen Gradienten von ca. 250 kW/s ein. Eine Leistungserhöhung $P_{increase}$ von bis zu 10% der Nennleistung der Windenergieanlage (WEA) wird nach ca. 800 ms erzielt. Bei kleinen Frequenzänderungen innerhalb des Regelbandes und im Leistungsbereich unterhalb 500kW, ist der Leistungsgradient durch das generatorbedingte Verhalten bei Leistungsänderungen leicht reduziert. Die Leistungserhöhung $P_{increase}$ ist über eine Zeit von max. 6,4s verfügbar. Nach spätestens 7 s wird die Wirkleistung der WEA wieder mit 250 kW/s auf den normalen Arbeitspunkt zurückgesetzt. Die Ausregelzeit ist abhängig von den Windverhältnissen und der sich während der Bereitstellungszeit einstellenden Anlagendrehzahl. Der Übergang bis zur Einspeisung der Leistung im Normalbetrieb ist in ca. 1s abgeschlossen.

In Fig. 5 ist über die Zeit eine Sollleistung $P_{order}$ für den Fall dargestellt, dass keine Leistungserhöhung vorgenommen werden würde. Diese Kurve ist auch zum Zwecke des Vergleichs eingefügt. Zum Zeitpunkt $t_B$ wird in Fig. 5 eine Unterfrequenz festgestellt und eine Leistungserhöhung von 200 kW vorgegeben. Diese im Grunde eckig dargestellte Leistungskurve ist mit $P_{increase}$ bezeichnet. Diese Leistung $P_{increase}$ steigt zum Zeitpunkt $t_B$ auf diesen um 200 kW erhöhten Wert an und hält diesen Wert konstant bis zur Endzeit $t_E$ und fällt dann auf den Wert der normalen Leistungssollkurve $P_{order}$ ab. Die normale Leistungskurve $P_{order}$ ist zwischenzeitlich abgefallen, ohne dass dies Einfluss auf die Kurve $P_{increase}$ hat. Die Zeit zwischen der Anfangszeit $t_B$ und der Endzeit $t_E$ beträgt etwa 8 sec. Außerdem ist noch eine Leistungskurve $P_{actual}$ eingezeichnet, die dem tatsächlich erreichten Wert der eingespeisten Leistung entspricht. Gemäß Fig. 5 ist somit die Leistungserhöhung $P_{increase}$ über die voreingestellte Bereitstellungszeit $t_{max}$ proportional zur Netzfrequenz. Dies entspricht einer Leistungsabgabe unabhängig von der sich einstellenden Drehzahl des Rotors der Windenergieanlage.

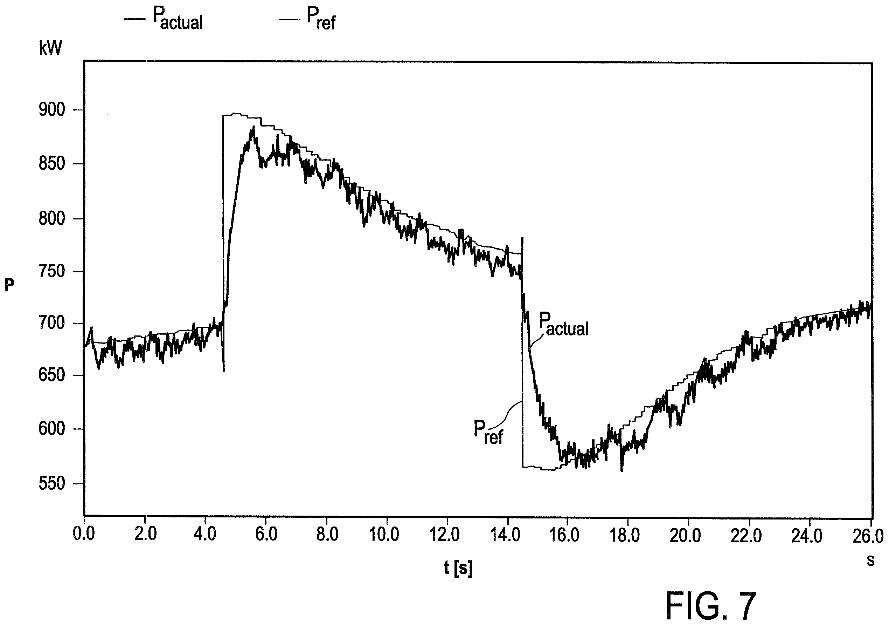

Zu Fig. 5 ist zudem ergänzend zu erläutern: Die Leistung der Windenergieanlage hängt während der Frequenzstützung nur von der Netzfrequenz ab. Über die voreingestellte Bereitstellungszeit $t_{max}$ ergibt sich zusätzlich die proportional zur Frequenzabweichung geforderte Leistungserhöhung $P_{increase}$. Die Gesamtwirkleistungsabgabe $P_{actual}$ ist somit die Summe aus der Leistung gemäß der Drehzahl-Leistungskennlinie zum Zeitpunkt der Aktivierung der Inertia Emulation und geforderter Leistungserhöhung $P_{increase}$. Begrenzt wird die Gesamtwirkleistungsabgabe von der maximalen Scheinleistung der Windenergieanlage. Im den Leistungsdiagrammen in Abbildung 7 bis 10 sind diese Grenzen der Windenergieanlage Konfigurationen dargestellt.

Bei der frequenzabhängigen und drehzahlabhängigen Leistungserhöhung gemäß Fig. 6 ist die erreichte Leistungserhöhung über die voreingestellte Bereitstellungszeit proportional zur Netzfrequenz und variiert zudem in Abhängigkeit von der sich einstellenden Drehzahl des Rotors. In Abhängigkeit von der Windgeschwindigkeit und der sich einstellenden Rotordrehzahl wird die Leistungserhöhung angepasst an die Drehzahl ausgebracht. Die Nomenklatur der Fig. 6 entspricht der der Fig. 5 und es wird zum Zeitpunkt $t_B$ eine Unterfrequenz erfasst und die Leistungserhöhung um etwa 200 kW erfolgt. Im weiteren Verlauf bis zur Endzeit $t_E$ nimmt die Drehzahl und damit auch die Sollleistung ohne Berücksichtigung einer Leistungserhöhung, nämlich $P_{order}$, ab. Die Leistungserhöhung $P_{increase}$ behält etwa einen Wert von 200 kW oberhalb der jeweils aktuellen Sollleistung $P_{order}$. Zum Zeitpunkt $t_E$ wird die Leistungserhöhung dann beendet und die Leistung $P_{actual}$ fällt auf den Wert der Sollleistung $P_{order}$ ab.

Zusätzlich wird erläuternd zu der Fig. 6 auf das Folgende hingewiesen: Die Leistung der Windenergieanlage bleibt auch während der Frequenzstützung mit der vorgegebenen Drehzahl-Leistungskennlinie in Abhängigkeit von der Windgeschwindigkeit gesteuert. Die Gesamtwirkleistungsabgabe $P_{actual}$ über die voreingestellte Bereitstellungszeit $t_{max}$ ergibt sich somit als Summe aus der aktuellen drehzahlabhängigen Leistung P und der proportional zur Frequenzabweichung geforderten Leistungserhöhung $P_{increase}$.

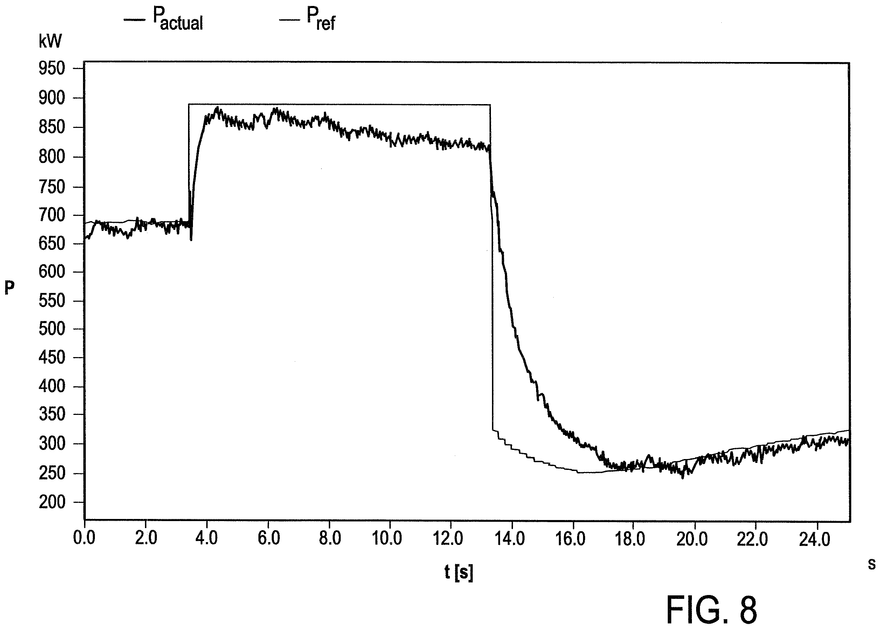

Fig. 7 und 8 zeigen zu den Fig. 6 und 5 korrespondierende Messungen bzw. Aufzeichnungen des Leistungssollwertes $P_{ref}$ und des tatsächlich eingestellten Leistungswertes $P_{actual}$. Der Leistungssollwert $P_{ref}$ betrifft dabei die Sollleistung unter Berücksichtigung der Leistungserhöhung. Die in Fig. 7 dargestellten Leistungsverläufe entsprechen dabei einer frequenzabhängigen und drehzahlabhängigen Leistungserhöhung, ähnlich der in Fig. 6 dargestellten. Die in Fig. 8 dargestellten Leistungsverläufe entsprechen einer nur frequenzabhängigen Leistungserhöhung, ähnlich der in Fig. 5 dargestellten. Es ist zu beachten, dass die Fig. 5 bis 8 aber jeweils eigene Verläufe darstellen.

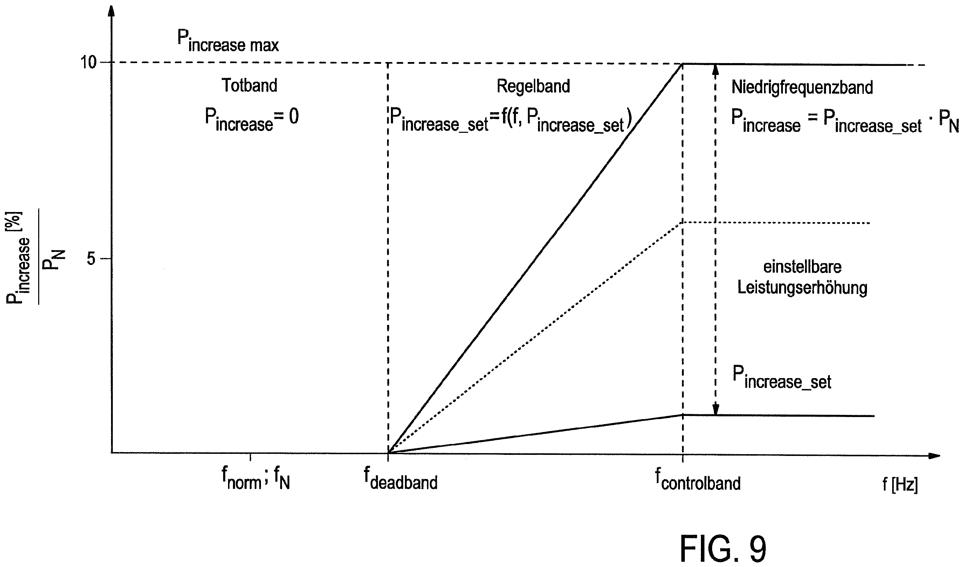

Fig. 9 zeigt zu einer Ausführungsform verschiedene mögliche frequenzabhängige Erhöhungen von $P_{increase}$ abhängig von dem gewählten Wert von $P_{increase\_set}$. Die drei beispielhaften Kurven sind gekennzeichnet mit $P_{increase}'$, $P_{increase}''$ und $P_{increase}'''$.

Die zusätzliche Leistung $P_{increase}$ ist proportional abhängig von der gemessenen Frequenzabweichung unterhalb der Totbandfrequenz. Die Leistungserhöhung wird ab der Totbandfrequenz $f_{deadband}$ von 0% linear gesteigert bis zur voreingestellten Leistungserhöhung $P_{increase\ set}$, bei erreichen der Regelbandfrequenz $f_{deadband}$. Die voreingestellte Leistungserhöhung $P_{increase\ set}$ kann zusätzlich, wenn vom Netzversorger gefordert, in 1% Schritten der Nennleistung bis zur maximal zulässigen Leistungserhöhung $P_{increase\ max}$, von der Nennleistung vorgegeben werden. $P_{increase\ set}$ wird auch bei größerer Frequenzabweichung nicht überschritten. Während der Bereitstellungszeit auftretende Frequenzänderungen erwirken unmittelbare Anpassungen in der Leistungserhöhung.

Das Verhältnis $P_{increase}$ / $P_{Nenn}$ in % kann abhängig von der Ist-Frequenz oder gemessenen Frequenz $f_{mess}$ und abhängig von dem Wert $P_{increase\_set}$, der in % angegeben ist, mit der folgenden Formel dargestellt werden, wobei $f_{totband}$ gleichbedeutend mit $f_{deadband}$ ist:

$$(P_{increase}/P_{Nenn})\ [\%] = ((f_{totband}-f_{mess})/(f_{totband}-f_{controlband}))\times P_{increase\_set}\ [\%]$$

In der Tabelle 1 sind für eine Beispielanlage charakteristische Werte bzw. Einstellbereiche angegeben. Grundsätzlich kann die Totbandfrequenz als $f_{Totband}$ oder $f_{deadband}$ und die Regelbandfrequenz als $f_{Regelband}$ oder $f_{controlband}$ bezeichnet werden. Die Leistungserhöhung kann als $P_{increase}$ oder $P_{extra}$ und die Nennleistung als $P_N$ oder $P_{nenn}$ bezeichnet werden. In der Zeile "maximale Leistungserhöhung" kann zwischen der Verwendung $P_{extra}$ = konstant oder $P_{extra}$ = variabel gewählt werden, abhängig davon, ob eine frequenzabhängige Leistungserhöhung oder eine frequenzabhängige und drehzahlabhängige Leistungserhöhung verwendet werden soll.

Tabelle 1

| Frequenzmessung | | | |
|---|---|---|---|
| Frequenzauflösung | 0,01 Hz | | |
| Frequenzgenauigkeit | 0,004 Hz | | |
| Frequenzerkennungszeit | t = 0,02 s | | |
| Frequenzmessbereich | 40 - 70 Hz | | |
| Frequenzbereich | | 50 Hz Netz | 60 Hz Netz |
| | Maximale Frequenz | $f_{max}$ = 57 Hz | $f_{max}$ = 67 Hz |
| | Nennfrequenz | $f_{nenn}$ = 50 Hz | $f_{nenn}$ = 60 Hz |
| | Minimale Frequenz | $f_{min}$ = 43 Hz | $f_{min}$ = 53 Hz |
| | | | |
| **Inertia Emulation bei Unterfrequenz** | | | |
| Maximale Bereitstellungszeit der Erhöhung | 8s | | |
| Detektionszeit | 0,02 s | | |
| | | | |
| | | 50 Hz Netz | 60 Hz Netz |
| Totbandfrequenz $f_{deadband}$ | | 49 - 50 Hz | 59 - 60 Hz |
| Regelbandfrequenz $f_{controlband}$ | | 47 - 50 Hz | 57 - 60 Hz |
| | | | |
| **Leistungserhöhung** | | | |
| Leistungserhöhung $P_{increase\ set}$ | 0 - 10% bezogen auf $P_{Nenn}$ | | |
| Max. Leistungserhöhung $P_{increase\ max}$ | 10% bezogen auf $P_{Nenn}$ | | |
| Einstellmöglichkeit | in Schritten von 1% bezogen auf $P_{Nenn}$ | | |
| | | | |
| | Normalleistung | zusätzliche Leistung | |
| | von 0% bis 4% $P_{nenn}$ | $P_{extra} \approx 0$ | |
| Maximale Leistungserhöhung | von 4% bis 100% $P_{nenn}$ | $P_{extra}$ = const | $P_{extra} \leq$ 10% $P_{nenn}$ |
| | von 4% bis 100% $P_{nenn}$ | $P_{extra}$ = variable | $P_{extra} \leq$ 10% $P_{nenn}$ |
| | | | |
| Gradient der Leistungsveränderung dP/dt | ≈250 kW/s | | |
| Erkennungszeit | 0,02 s | | |
| Anstiegszeit [für 200 kW] | 0,8 s | | |
| Abfallzeit oder Ausregelzeit s.o. | $\leq$ 1,0 s | | |
| Wartezeit bis zur nächsten Erhöhung | $\geq$ 2 x maximale Dauer der Erhöhung | | |

**Patentansprüche**

1. Verfahren zum Betrieb einer Windenergieanlage, wobei die Windenergieanlage mit einem Vollumrichter an ein elektrisches Versorgungsnetz angeschlossen ist und im Betrieb, d.h., wenn Wind herrscht, der oberhalb der Anfangsgeschwindigkeit und unterhalb der Abschaltgeschwindigkeit liegt, elektrische Energie in das Versorgungsnetz einspeist und zwar in der vom Versorgungsnetz gewünschten bzw. erforderlichen Spannung und Frequenz, wobei im Betrieb der Windenergieanlage oberhalb des Nennwertes bzw. unterhalb der Abschaltgeschwindigkeit der Rotor der Windenergieanlage, der wenigstens ein Rotorblatt aufweist, sich dreht und mit dem Rotor der Windenergieanlage ein Generator verbunden ist, der durch den Rotor angetrieben wird, um somit elektrische Energie zu erzeugen, wobei die Windenergieanlage Mittel aufweist, um die im elektrischen Versorgungsnetz herrschende Frequenz zu messen und diese Mittel zum Messen der Netzfrequenz verbunden sind mit einer Steuereinrichtung zum Steuern des Betriebs der Windenergieanlage,

**dadurch gekennzeichnet, dass** die vom Generator der Windenergieanlage an das Netz abgegebene Leistung kurzfristig und für einen kurzen Zeitraum über die aktuelle Leistung der Windenergieanlage angehoben wird, wenn die Netzfrequenz des elektrischen Netzes um einen vorbestimmten Frequenzwert unterhalb der gewünschten Sollfrequenz des Netzes liegt, wobei

- in einem Totbandbereich (30), nämlich einem Frequenzbereich der Netzfrequenz (36) zwischen der Netzsollfrequenz und einer darunter liegenden Totbandfrequenz, die Leistung nicht verändert wird,
- in einem Regelbandbereich (32), nämlich einem Frequenzbereich der Netzfrequenz zwischen der Totbandfrequenz und einer darunter liegenden Regelbandfrequenz, die Leistung in Abhängigkeit einer Frequenzabweichung der Netzfrequenz von der Totbandfrequenz erhöht wird, und
- in einem Unterfrequenzbereich (34), nämlich einem Frequenzbereich der Netzfrequenz von der Regelbandfrequenz abwärts, die Leistung (38) konstant um eine maximal voreingestellte Leistungserhöhung erhöht ist,

wobei die kurzfristige Leistungserhöhung unter Ausnutzung der in dem Trägheitsmoment des Rotor-/Generatorsystems (6, 7, 8) gespeicherten Rotationsenergie erfolgt.

2. Verfahren nach Anspruch 1,
**dadurch gekennzeichnet, dass** der vorbestimmte Frequenzwert größer ist als 1‰ vorzugsweise größer ist als 2‰, besonders vorzugsweise größer ist als 3‰ der Netzsollfrequenz.

3. Verfahren nach einem der vorhergehenden Ansprüche,
**dadurch gekennzeichnet, dass** die Frequenz der eingespeisten Leistung stets der aktuellen Netzfrequenz entspricht, d.h., dass die eingespeiste Leistung eine Frequenz unterhalb der Netzfrequenz annimmt, wenn die Netzfrequenz geringer ist als der Sollwert der Netzfrequenz, z.B. 50 oder 60Hz.

4. Verfahren nach einem der vorhergehenden Ansprüche,
**dadurch gekennzeichnet, dass** die Erhöhung der Leistung oberhalb der aktuellen Leistung erfolgt, d.h. auch oberhalb der Nennleistung, wenn zuvor mit Nennleistung eingespeist wurde.

5. Verfahren nach einem der vorstehenden Ansprüche,
**dadurch gekennzeichnet, dass** innerhalb eines Zeitraums von 10 bis 1000 ms, insbesondere 20 bis 500 ms, vorzugsweise 50 bis 100 ms nach Unterschreiten des vorbestimmten Frequenzwertes, die Leistungserhöhung erfolgt und/oder dass mit einer erhöhten Leistung, d.h. einer Leistung, die oberhalb der zuvor eingestellten Leistung liegt, eingespeist wird für einen weiteren Zeitraum von wenigstens 0,5 sec, vorzugsweise wenigstens 1 sec bis maximal 30 sec, vorzugsweise maximal ca. 3 bis 6, 8, 10, 12 oder 15 sec.

6. Verfahren zum Steuern eines Windparks mit wenigstens zwei Windenergieanlagen, bei dem jede Windenergieanlage gemäß einem Verfahren nach einem der vorstehenden Ansprüche gesteuert wird,
**dadurch gekennzeichnet, dass** die Anhebung der an das Netz abzugebenden Leistung aller Windenergieanlagen einheitlich und/oder zentral gesteuert wird.

7. Windenergieanlage, mit steuertechnischen Mitteln, die zur Durchführung des Verfahrens nach einem der vorhergehenden Ansprüche, ausgebildet sind.

8. Windpark, wobei der Windpark mehrere Windenergieanlagen gemäß Anspruch 7 umfasst, und/oder steuertechnische Mittel aufweist, die dazu ausgebildet sind, ein Verfahren nach Anspruch 6 durchzuführen.

**Claims**

1. Method for operating a wind turbine, wherein the wind turbine is connected with a full-scale frequency converter to an electrical power supply network and during operation, that is to say, when there is wind which is above the starting speed and below the shut-off speed, feeds electrical energy into the supply network at the voltage and frequency desired or required by the supply network, wherein, during operation of the wind turbine above the nominal value or below the shut-off speed, the rotor of the wind turbine, which has at least one rotor blade, rotates and there is connected to the rotor of the wind turbine a generator which is driven by the rotor in order to consequently produce electrical energy, wherein the wind turbine has means for measuring the frequency present in the electrical power supply network and these means for measuring the network frequency are connected to a control device for controlling the operation of the wind turbine,

**characterised in that** the power which is discharged to the network by the generator of the wind turbine is raised temporarily and for a short period of time above the current power of the wind turbine when the network frequency of the electrical network is below the desired intended frequency of the network by a predetermined frequency value, wherein

- in a dead band range (30), that is to say, a frequency range of the network frequency (36) between the desired network frequency and a dead band frequency below it, the power is not changed,
- in a control band range (32), that is to say, a frequency range of the network frequency between the dead band frequency and a control band frequency which is below it, the power is increased in accordance with a frequency deviation of the network frequency from the dead band frequency, and
- in an underfrequency range (34), that is to say, a frequency range of the network frequency downward from the control band frequency, the power (38) is constantly increased by a maximum preadjusted power increase,

wherein the temporary power increase is carried out using the rotation energy stored in the moment of inertia of the rotor/generator system (6, 7, 8).

2. Method according to claim 1,
   **characterised in that** the predetermined frequency value is greater than 1%, preferably greater than 2%, in a particularly preferred manner greater than 3% of the desired network frequency.

3. Method according to any one of the preceding claims, **characterised in that** the frequency of the power supplied always corresponds to the current network frequency, that is to say that the power supplied assumes a frequency below the network frequency when the network frequency is lower than the desired value of the network frequency, for example, 50 or 60 Hz.

4. Method according to any one of the preceding claims, **characterised in that** the increase of the power is carried out above the current power, that is to say, also above the nominal power if nominal power has previously been supplied.

5. Method according to any one of the preceding claims, **characterised in that** the power increase is carried out within a time period of from 10 to 1000 ms, in particular from 20 to 500 ms, preferably from 50 to 100 ms after a value falls below the predetermined frequency value and/or **in that** with an increased power, that is to say, a power which is above the previously adjusted power, the supply is carried out for an additional time period of at least 0.5 seconds, preferably from at least 1 second to a maximum of 30 seconds, preferably a maximum of from 3 to 6, 8, 10, 12 or 15 seconds.

6. Method for controlling a wind park having at least two wind turbines, in which each wind turbine is controlled in accordance with a method according to any one of the preceding claims,
   **characterised in that** the increase of the power, which is intended to be discharged to the network, of all the wind turbines is controlled in a uniform and/or central manner.

7. Wind turbine having technical control means which are constructed to carry out the method according to any one of the preceding claims.

8. Wind park, wherein the wind park comprises a plurality of wind turbines according to claim 7 and/or has technical control means which are constructed to carry out a method according to claim 6.

**Revendications**

1. Procédé pour faire fonctionner une éolienne, dans lequel l'éolienne est raccordée à un réseau d'alimentation électrique par un convertisseur de puissance et injecte de l'énergie électrique dans le réseau d'alimentation, à savoir avec la tension et la fréquence souhaitées ou exigées par le réseau d'alimentation, en service, en d'autres termes lorsqu'il existe un vent qui se situe au-dessus de la vitesse de début et en dessous de la vitesse de coupure, dans lequel le rotor de l'éolienne, qui présente au moins une pale de rotor, tourne lorsque l'éolienne fonctionne au-dessus de la valeur nominale ou en dessous de la vitesse de coupure et un générateur est relié au rotor de l'éolienne, qui est entraîné par le rotor pour générer ainsi de l'énergie électrique, dans lequel l'éolienne présente des moyens pour mesurer la fréquence régnant dans le réseau d'alimentation électrique et ces moyens de mesure de la fréquence de réseau sont reliés à un dispositif de commande pour commander le fonctionnement de l'éolienne, **caractérisé en ce que** la puissance fournie au réseau par le générateur de l'éolienne est portée rapidement et pour une courte période au-dessus de la puissance courante de l'éolienne lorsque la fréquence de réseau du réseau électrique se situe sous la fréquence de consigne souhaitée du réseau d'une valeur de fréquence prédéfinie, dans lequel

- la puissance n'est pas modifiée dans une plage de bande morte (30), à savoir une plage de fréquences de la fréquence de réseau (36) entre la fréquence de consigne du réseau et une fréquence de bande morte située en dessous
- la puissance est augmentée en fonction d'un écart de fréquence de la fréquence de réseau par rapport à la fréquence de bande morte dans une plage de bande de réglage (32), à savoir une plage de fréquences de la fréquence de réseau entre la fréquence de bande morte et une fréquence de bande de réglage située en dessous, et
- la puissance (38) est augmentée de manière constante d'une augmentation de puissance préréglée au maximum dans une plage de fréquences inférieures (34), à savoir une plage de fréquences de la fréquence de réseau au-dessous de la fréquence de bande de réglage,

dans lequel l'augmentation de puissance rapide est effectuée en exploitant l'énergie de rotation stockée dans le couple d'inertie du système de rotor/générateur (6, 7, 8).

2.  Procédé selon la revendication 1,
    **caractérisé en ce que** la valeur de fréquence prédéfinie est supérieure à 1 ‰, de préférence est supérieure à 2 ‰, en particulier de préférence supérieure à 3 ‰ de la fréquence de consigne de réseau.

3.  Procédé selon l'une quelconque des revendications précédentes,
    **caractérisé en ce que** la fréquence de la puissance injectée correspond toujours à la fréquence de réseau courante, en d'autres termes la puissance injectée adopte une fréquence sous la fréquence de réseau lorsque la fréquence de réseau est inférieure à la valeur de consigne de la fréquence de réseau, par exemple 50 ou 60 Hz.

4.  Procédé selon l'une quelconque des revendications précédentes,
    **caractérisé en ce que** l'augmentation de la puissance est effectuée au-dessus de la puissance courante, en d'autres termes également au-dessus de la puissance nominale lorsqu'une injection avec une puissance nominale a été réalisée au préalable.

5.  Procédé selon l'une quelconque des revendications précédentes,
    **caractérisé en ce que** l'augmentation de puissance est effectuée dans une période de 10 à 1000 ms, en particulier de 20 à 500 ms, de préférence de 50 à 100 ms après le non-dépassement de la valeur de fréquence prédéfinie, et/ou que l'injection d'une puissance augmentée, en d'autres termes d'une puissance, qui se situe au-dessus de la puissance réglée au préalable, est réalisée pendant une autre période d'au moins 0,5 sec, de préférence d'au moins 1 sec à maximum 30 sec, de préférence de maximum env. 3 à 6, 8, 10, 12 ou 15 sec.

6.  Procédé pour commander un parc éolien avec au moins deux éoliennes, où chaque éolienne est commandée selon un procédé selon l'une quelconque des revendications précédentes,
    **caractérisé en ce que** la hausse de la puissance de toutes les éoliennes à fournir au réseau est commandée de manière homogène et/ou de manière centrale.

7.  Eolienne avec des moyens techniques de commande, qui sont réalisés pour mettre en oeuvre le procédé selon l'une quelconque des revendications précédentes.

8.  Parc éolien, dans lequel le parc éolien comprend plusieurs éoliennes selon la revendication 7 et/ou présente des moyens techniques de commande, qui sont réalisés pour mettre en oeuvre un procédé selon la revendication 6.

6

1

2

8

Rotor 7

4

FIG. 1

FIG. 2

**FIG. 3**

Leistungs-Unterfrequenz-Antwort

$tmax_{P\text{-}increase} \le 8sec$

Frequenz

$f_{norm}$

$f_{dead\text{-}band}$

$f_{control\text{-}band}$

Frequenz zu... Frequenz [Hz]

Leistung >= 4% Pn

Beginn der Leistungserhöhung

Ende der Leistungserhöhung

Frequenz-Totbandbereich

Beginn des Leistungsabfalls

Leistungs-erhöhung max. 10% Pn

Regelbandbereich

Ende des Leistungsabfalls

Unterfrequenzbereich

$t_0$  $t_1$  5  $t_2$  10 $t_3$  $t_4$

Zeit [s]

36  36  38  30  32  34

EP 2 647 840 B1

**Unterfrequenz-Antwort**

$\Delta t_{detect} \mathrel{<=} 20ms$

$tmax_{P\text{-}increase} = 8sec$

$\Delta t_{increase} \mathrel{<=} 800ms$

$\Delta t_{decrease} \mathrel{<=} 1000ms$

Leistungs-erhöhung = 10% Pn

Frequenz

$f_{totband}$

$f_{controlband}$

Leistung

Wind

36

38

38

36

Frequenz [Hz]

50.0

49.5

49.0

$t_0^* \, t_1^*$  5  $t_2^*$  $t_3^*$  10  $t_4^*$

Zeit [s]

**FIG. 4**

**Unterfrequenz-Antwort (P konstant)**

FIG. 5

EP 2 647 840 B1

FIG. 6

FIG. 7

FIG. 8

FIG. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7345373 B
- WO 0186143 A
- WO 01086143 A
- DE 102005052011 A1
- US 20070085343 A1

**In der Beschreibung aufgeführte Nicht-Patentliteratur**

- Grid Integration of Wind Energy Conversion Systems. Siegfried Heier, 1998